# EUROPEAN PATENT APPLICATION

(11) **EP 3 369 324 A1**
(43) Date of publication of application: **05.09.2018**
(21) Application number: 16856509.1
(22) Date of filing: 19.10.2016
(51) Int. Cl.: A23G 1/32, A23G 1/40, A23L 33/26

(54) **MILK-FREE, SUGAR-FREE, GLUTEN-FREE, SOY-FREE WHITE CHOCOLATE FORMULATION WITH OR WITHOUT FIBRES**

(30) Priority: 20.10.2015 BR 102015026538
(71) Applicant: Carmine Giunti De Oliveira, Luiz, Campina Grande do Sul (BR); Orlandi Giunti Oliveira, Eloisa Helena, Campina Grande do Sul (BR)
(72) Inventor: Carmine Giunti De Oliveira, Luiz, Campina Grande do Sul (BR); Orlandi Giunti Oliveira, Eloisa Helena, Campina Grande do Sul (BR)
(74) Representative: Isern Patentes y Marcas S.L.
(86) International application number: PCT/BR2016/050262
(87) International publication number: WO 2017/066858

(57) **Abstract**

The invention patent relates to a formulation of a mixture especially designed for producing milk-free (milk protein-free and lactose-free), sugar-free and soy-free white chocolate with or without fibres in its composition, with a pleasant taste similar to that of conventional white chocolate, retaining the sweet taste of sugar and milk. The present formulation meets the needs of those who are lactose-intolerant and allergic to milk and soy proteins, who cannot consume sugar and gluten, and also of those who do not wish to eat chocolate containing sugar, milk, soy and gluten in its composition. The formulation has the advantage of providing a product which does not contain soy and milk protein allergens, while retaining the characteristics of not leaving a bitter aftertaste in the mouth, having a sweetness that is very similar to that of conventional white chocolate, and being consumable by diabetic and coeliac patients, and by those who follow natural or other special diets.

## Description

The present invention relates to a blended formulation specially developed for the production of milk-free white chocolate (without milk proteins and lactose-free), sugar-free, soy-free and with or without fibers in its composition, with a pleasant taste and similar to conventional white chocolate, keeping the sweet taste of sugar and milk. The formulation in question, meets the needs of people with lactose intolerance and allergic to milk and soy proteins, who can not consume sugar and gluten, and also of people who do not want to consume chocolate with sugar, milk, soy and gluten in its composition. The formulation offers advantages of providing a product without the allergens of soy and milk protein, maintaining the characteristics of not leaving residual bitter in the mouth, presenting sweetness very similar to conventional white chocolate and that can be consumed by diabetics, celiacs, naturists and other special consumers.

As is known by the technical means related to the manufacture of foods based on cocoa butter, currently in the conventional white chocolate formulations, apply cocoa butter, associated with sugar, cow milk and without fiber-providing ingredients. In formulations of dietary white chocolate, natural or artificial sweeteners are applied in place of sugar.

Later on, an alternative to white chocolate emerged as an object of an invention by the same inventors of the present patent, which disclosed the blended formulation specially developed to obtain white chocolate without milk, sugar-free and with fibers in its composition, with pleasant flavor and very close to conventional white chocolate, keeping the sweet taste of sugar without the calories of the same, (meeting the needs of people with lactose intolerance, allergies to milk proteins and who can not consume sugar and gluten and also people who do not want consuming chocolate with sugar, lactose in its composition), through a formulation with cocoa butter, maltodextrin, polydextrose, sucralose sweetener and flavorings, supplemented by 25 to 40% polyol, chosen from maltitol, lactitol and xylitol and 4 to 20% of defatted soy extract, bringing advantages of not leaving residual bitter in the mouth, presenting sweetness very similar to conventional white chocolate and that can be consumed by diabetics, celiacs, lactose intolerant, allergic to milk proteins, naturists and other special consumers.

Scientific research shows that soy has several antinutritional factors, the most serious being the allergenic factors, where it is currently the 11th product in terms of allergenicity, accounting for 3% of cases of allergies in children. Soy can cause immediate reactions such as coughing, sneezing, runny nose, urticaria, and diarrhea, difficulty swallowing and depending on the degree of allergenicity until anaphylactic shock. Further allergic responses may also occur a few hours to a few days after eating the food.

Searching the Brazilian and international patent bank, we find the following patent applications:
1) A Brazilian patent PI0007411-0 which discloses dietary composition of chocolate sweetened by a predominant sweetener system comprising 10 to 90% by weight of maltitol, 9 to 89% by weight of lactitol and 1 to 30% by weight of polydextrose.
2) U.S. Patent 7,867,544 entitled Food Compositions and Related Methods. An amorphous sugar-free sweetener composition acts as a sugar substitute in the production of a chocolate confectionery product. Maltitol syrup may be employed in a blend to obtain a chocolate confectionery product as a dry composition substitute of milk to form a chocolate confectionery product with improved taste and texture characteristics compared to other sugar-free chocolate confectionery compositions. Other amorphous sweetening compositions may be used in the production of chocolate compositions. Methods of preparing chocolate compositions are also described.

The formulations disclosed in the prior art do not provide solutions for soy replacement, not meeting the needs of consumers allergic to soy and milk proteins, intolerant to lactose and gluten in a single product sugar-free, without milk and with and without fibers. In addition, without the inconveniences of using high percentages of maltitol that if consumed in excess, causes undesirable effects for some people, being able to cause flatulence, discomfort and in some cases diarrhea.

With the arrival of new technologies for the production of lactose-free ingredients, the possibility of carrying out technical research in search of balanced and optimized formulations to obtain dietary chocolate in sugar and at the same time without milk, gluten-free and soy-free and with and without fibers, in addition to replacing chemically transformed body agents such as polyols and maltodextrin.

"FORMULATION OF WHITE CHOCOLATE WITHOUT MILK, SUGAR-FREE, GLUTEN-FREE, SOY-FREE AND WITH OR WITHOUT FIBERS", object of the present invention has been developed to overcome the disadvantages, drawbacks and limitations of existing formulations as it has been specially developed to obtain lactose-free white chocolate, without milk proteins, sugar-free, gluten-free, soy-free and with or without fiber, with allergen-lowering, with fiber enhancement until reaching the fiber source appeal, and with body agents which are substitutes for chemically transformed ingredients in its composition, with a pleasant taste and similar to conventional white chocolate, meeting the needs of people allergic to soy and milk proteins and also people who do not want to consume chocolate with sugar, milk, soy and gluten in its composition, bringing advantages of not leaving residual bitter in the mouth, to bring less risks of laxative effects, and have a very similar taste to conventional white chocolate.

The current formulations present the following technical problems which have been solved by the present invention in the following manner:
1. Presence of soy in the composition limiting the use of white chocolate to non-allergic persons to soy, solved by the present patent through the replacement of soy for coconut fat and rice derivative.
2. Difficulty of balancing a white chocolate formulation with proteins and carbohydrates obtained from food raw materials, solved by the present patent through the use of the rice derivative, which has in its composition a nutritional profile that obtains taste, softness and texture desired;
3. Presence of polyols in a certain amount causes laxative effects on consumers, solved through the present patent by the replacement of body agents containing ingredients chemically transformed by mechanically processed natural ingredients.

The following inventive concepts about the new ingredients tested were considered in the research conducted with some ingredients changes:
The fat present in ingredients with coconut fats (coconut oil and coconut milk) is rich in antioxidants. In terms of technological application, during the first phase of mixing the ingredients, both coconut oil and coconut milk leave the dough more homogeneous and elastic, mainly, returning the fat lost, due to the withdrawal of cow milk and soy milk. The coconut oil and coconut milk provide a better sensory profile, giving softness and mouthfeel to the finished product.

In rice derivatives (rice flour or rice extract or powder for the preparation of rice-based beverages), carbohydrates are basically represented by starch, which is formed by chains of amylose and amylopectin, responsible for many of the final product properties, the most important being the provision of a natural body for the formulations. The second major component in the structure of rice flour or rice extract or powder for the preparation of rice-based beverages is the protein, accounting for about 7-9% of its composition. For this reason, the rice flour or rice extract or powder for the preparation of rice-based beverages is applied to the formulations in replacement to the protein found in soy extract and also because it does not contain gluten and food allergens in its composition.

After incessant and costly research and practical tests, we obtained optimized and balanced mixtures from the following premises and technical characteristics:
a) Researches for types and quantities of raw materials, substitutes for ingredients containing the soy allergen, and which have a neutral color, odor and taste and appearance of powder. In addition, they contain sugars naturally present in the raw materials, provided that they comply with the identity and quality standard of foods with no added sugars and their effects on the digestive and intestinal system;
b) Researches for types and quantities of sweeteners and their effects on the digestive and intestinal system;
c) Research on substitutes for ingredients that cause intolerance, such as lactose and gluten;
d) Researches for polyol substitutes that cause laxative effects; and
e) Research of balanced mixtures of ingredients, to obtain the desired fat, protein and calorie content and according to the sanitary legislation.

The tests of the said researches that determined the operating limits of the ingredients, in synthesis were the following:

### TEST 1

| INGREDIENTS | % by weight |
|---|---|
| Cocoa butter | 19.00 |
| Coconut oil | 6.00 |
| Maltitol | 30.00 |
| Erythritol | 5.00 |
| Polydextrose | 10.00 |
| Maltodextrin | 15.00 |
| Rice flour | 14.20 |
| Sunflower lecithin | 0.40 |
| Flavor of vanilla | 0.07 |
| Flavor of condensed milk | 0.20 |
| Flavor of gianduia | 0.05 |
| Sucralose sweetener | 0.04 |
| PGPR (Glyceryl Polyricinoleate) | 0.04 |

Result: Hard dough, sandy, difficult handling, out of white chocolate standards, due to the low content of cocoa butter. Disapproved by tasters. Without any kind of application.

### TEST 2

| INGREDIENTS | % by weight |
|---|---|
| Cocoa butter | 20.00 |
| Coconut oil | 5.00 |
| Maltitol | 30.00 |
| Erythritol | 5.00 |
| Polydextrose | 15.00 |
| Maltodextrin | 9.20 |
| Rice flour | 15.00 |
| Sunflower lecithin | 0.40 |
| Flavor of vanilla | 0.07 |
| Flavor of condensed milk | 0.20 |
| Flavor of gianduia | 0.05 |
| Sucralose Sweetener | 0.04 |
| PGPR | 0.04 |

Result: Dough with fiber approved by tasters, with application for bakery products due to their high viscosity.

### TEST 2-A

The same formula of test 2 was repeated by replacing the coconut oil with coconut milk and the same final result was obtained.

### TEST 2-B

The same formula of test 2 was repeated by replacing the rice flour with rice extract and the same final result was obtained.

### TEST 2-C

The same formula of test 2-B was repeated by replacing the coconut milk with coconut oil and the same final result was obtained.

### TEST 2-D

The same formula of test 2 was repeated by replacing the rice flour with powder for rice-based beverage preparation and the same final result was obtained.

### TEST 2-E

The same formula of the 2-D test was repeated by replacing the coconut oil with coconut milk and the same final result was obtained.

### TEST 3

| INGREDIENTS | % by weight |
|---|---|
| Cocoa butter | 46.00 |
| Maltitol | 30.00 |
| Erythritol | 8.00 |
| Polydextrose | 5.20 |
| Rice flour | 10.00 |
| Sunflower lecithin | 0.40 |
| Flavor of vanilla | 0.07 |
| Flavor of condensed milk | 0.20 |
| Flavor of gianduia | 0.05 |
| Sucralose Sweetener | 0.04 |
| PGPR | 0.04 |

Result: Chocolate dough with strong flavor of cocoa butter, high in fat and caloric. Disapproved by tasters.

### TEST 4

| INGREDIENTS | % by weight |
|---|---|
| Cocoa butter | 45.00 |
| Maltitol | 30.00 |
| Erythritol | 5.00 |
| Polydextrose | 12.00 |
| Rice flour | 7.20 |
| Sunflower lecithin | 0.40 |
| Flavor of vanilla | 0.07 |
| Flavor of condensed milk | 0.20 |
| Flavor of gianduia | 0.05 |
| Sucralose sweetener | 0.04 |
| PGPR | 0.04 |

Result: Dough with acceptable taste of butter, soft, good viscosity and with various types of application with fiber appeal. Approved by tasters.

### TEST 4-A

The same formula of test 4 was repeated by replacing the rice flour with rice extract and the same final result was obtained.

### TEST 4-B

The same formula of test 4 was repeated by replacing the rice flour with powder for rice-based beverage preparation and the same final result was obtained.

### TEST 5

| INGREDIENTS | % by weight |
|---|---|
| Cocoa butter | 30.00 |
| Coconut oil | 3.00 |
| Maltitol | 30.00 |
| Erythritol | 5.60 |
| Polydextrose | 10.00 |
| Maltodextrin | 18.70 |
| Rice flour | 1.90 |
| Sunflower lecithin | 0.40 |
| Flavor of vanilla | 0.07 |
| Flavor of condensed milk | 0.20 |
| Flavor of gianduia | 0.05 |
| Sucralose sweetener | 0.04 |
| PGPR | 0.04 |

Result: Dough with good viscosity for various types of applications, but with undesirable sensory profile (*mouthfeel*) due to the low content of rice flour and even with the application of the aromas, it did not reach the identity of conventional white chocolate, being disapproved by tasters.

### TEST 6

| INGREDIENTS | % by weight |
|---|---|
| Cocoa butter | 30.00 |
| Coconut oil | 3.00 |
| Maltitol | 30.00 |
| Erythritol | 5.00 |
| Polydextrose | 12.00 |
| Maltodextrin | 17.20 |
| Rice flour | 2.00 |
| Sunflower lecithin | 0.40 |
| Flavor of vanilla | 0.07 |
| Flavor of condensed milk | 0.20 |
| Flavor of gianduia | 0.05 |
| Sucralose sweetener | 0.04 |
| PGPR | 0.04 |

Result: Dough with good viscosity for various types of applications, soft and according to the standards of white chocolate with fiber appeal. The balance between the flour used in the formulation, together with the other ingredients, stimulated the stabilization of the dough and the sensorial profile related to the flavor (*mouthfeel*). Approved by tasters.

### TEST 6-A

The same formula of test 6 was repeated by replacing the coconut oil with coconut milk and the same final result was obtained.

### TEST 6-B

The same formula of test 6 was repeated by replacing the rice flour with rice extract and the same final result was obtained.

### TEST 6-C

The same formula of test 6-B was repeated by replacing the coconut milk by coconut oil and the same final result was obtained.

### TEST 6-D

The same formula of test 6 was repeated by replacing the rice flour with powder for rice-based beverage preparation and the same final result was obtained.

### TEST 6-E

The same formula of test 6-D was repeated by replacing the coconut oil with coconut milk and obtained the same final result.

### TEST 7

| INGREDIENTS | % by weight |
|---|---|
| Cocoa butter | 30.00 |
| Coconut oil | 5.00 |
| Maltitol | 30.00 |
| Erythritol | 5.00 |
| Polydextrose | 4.00 |
| Maltodextrin | 4.20 |
| Rice flour | 21.00 |
| Sunflower lecithin | 0.40 |
| Flavor of vanilla | 0.07 |
| Flavor of condensed milk | 0.20 |
| Flavor of gianduia | 0.05 |
| Sucralose sweetener | 0.04 |
| PGPR | 0.04 |

Result: Hard, fibrous and brittle dough. Strong taste of rice flour. Disapproved by tasters.

### TEST 8

| INGREDIENTS | % by weight |
|---|---|
| Cocoa butter | 30.00 |
| Coconut oil | 5.00 |
| Maltitol | 30.00 |
| Polydextrose | 10.00 |
| Maltodextrin | 4.20 |
| Rice flour | 20.00 |
| Sunflower lecithin | 0.40 |
| Flavor of vanilla | 0.07 |
| Flavor of condensed milk | 0.20 |
| Flavor of gianduia | 0.05 |
| Sucralose Sweetener | 0.04 |
| PGPR | 0.04 |

Result: Dough according to the standards, featuring white chocolate. Soft, good viscosity and with flour balance and for various types of applications. Approved by tasters for chocolate without fiber.

### TEST 8-A

The same formula of test 8 was repeated by replacing the coconut oil with coconut milk and the same final result was obtained.

### TEST 8-B

The same formula of test 8 was repeated by replacing the rice flour with rice extract and obtaining the same final result.

### TEST 8-C

The same formula of test 8-B was repeated by replacing the coconut milk by coconut oil and the same final result was obtained.

### TEST 8-D

The same formula of test 8 was repeated by replacing the rice flour with powder for the preparation of rice-based beverage and obtained the same final result.

### TEST 8-E

The same formula of the test 8-D was repeated by replacing the coconut oil with coconut milk and the same final result was obtained.

### TEST 9

| INGREDIENTS | % by peso |
|---|---|
| Cocoa butter | 32.00 |
| Maltitol | 4.00 |
| Erythritol | 15.00 |
| Polydextrose | 17.00 |
| Maltodextrin | 19.20 |
| Rice flour | 12.00 |
| Sunflower lecithin | 0.40 |
| Flavor of vanilla | 0.07 |
| Flavor of condensed milk | 0.20 |
| Flavor of gianduia | 0.05 |
| Sucralose sweetener | 0.04 |
| PGPR | 0.04 |

Result: Dough with low sweetness result due to the low maltitol content, even with the addition of sucralose, unsatisfactory viscosity, not approved by tasters.

### TEST 10

| INGREDIENTS | % by weight |
|---|---|
| Cocoa butter | 32.00 |
| Maltitol | 5.00 |
| Erythritol | 15.00 |
| Polydextrose | 17.00 |
| Maltodextrin | 18.20 |
| Rice flour | 12.00 |
| Sunflower lecithin | 0.40 |
| Flavor of vanilla | 0.07 |
| Flavor of condensed milk | 0.20 |
| Flavor of gianduia | 0.05 |
| Sucralose sweetener | 0.04 |
| PGPR | 0.04 |

Result: Dough with acceptable sweetness with maltitol balance and viscosity for various application types. Approved by tasters for chocolate with fibers.

### TEST 10-A

The same formula of test 10 was repeated by replacing the rice flour with extract and obtained the same final result.

### TEST 10-B

The same formula of test 10 was repeated by replacing the rice flour with powder for the preparation of rice-based beverage and obtained the same final result.

### TEST 11

| INGREDIENTS | % by weight |
|---|---|
| Cocoa butter | 30.00 |
| Coconut oil | 2.00 |
| Maltitol | 46.00 |
| Polydextrose | 8.00 |
| Maltodextrin | 7.00 |
| Rice flour | 6.20 |
| Sunflower lecithin | 0.40 |
| Flavor of vanilla | 0.07 |
| Flavor of condensed milk | 0.20 |
| Flavor of gianduia | 0.05 |
| Sucralose sweetener | 0.04 |
| PGPR | 0.04 |

Result: Dough with good viscosity, sweetness, but with a probability of causing laxative effects, due to the excessive use of maltitol. Disapproved by tasters.

### TEST 12

| INGREDIENTS | % by weight |
|---|---|
| Cocoa butter | 30.00 |
| Coconut oil | 2.00 |
| Maltitol | 45.00 |
| Polydextrose | 9.00 |
| Maltodextrin | 7.00 |
| Rice flour | 6.20 |
| Sunflower lecithin | 0.40 |
| Flavor of vanilla | 0.07 |
| Flavor of condensed milk | 0.20 |
| Flavor of gianduia | 0.05 |
| Sucralose sweetener | 0.04 |
| PGPR | 0.04 |

Result: Dough with good viscosity, sweetness with maltitol balance, requiring no sucralose addition, with various types of application including baking, for products without the appeal of fibers and without laxative and gastrointestinal effects. Approved by tasters for chocolate without fiber.

### TEST 12-A

The same formula of test 12 was repeated by replacing the coconut oil with coconut milk and the same final result was obtained.

### TEST 12-B

The same formula of test 12 was repeated by replacing the rice flour with o rice extract and the same final result was obtained.

### TEST 12-C

The same formula of test 12-B was repeated by replacing the coconut milk by coconut oil and the same final result was obtained.

### TEST 12-D

The same formula of test 12 was repeated by replacing rice flour with powder for rice-based beverage preparation and the same final result was obtained.

### TEST 12-E

The same formula of the 12-D test was repeated by replacing the coconut oil with coconut milk and the same final result was obtained.

### TEST 13

| INGREDIENTS | % by weight |
|---|---|
| Cocoa butter | 32.00 |
| Maltitol | 35.00 |
| Erythritol | 20.00 |
| Polydextrose | 2.20 |
| Powder for rice-based beverage preparation | 10.00 |
| Sunflower lecithin | 0.40 |
| Flavor of vanilla | 0.07 |
| Flavor of condensed milk | 0.20 |
| Flavor of gianduia | 0.05 |
| Sucralose sweetener | 0.04 |
| PGPR | 0.04 |

Result: Dough with good viscosity, sweetness, but with a marked refresh effect due to the erythritol and also having the dough likely to present laxative effects. Disapproved by tasters.

### TEST 14

| INGREDIENTS | % by weight |
|---|---|
| Cocoa butter | 32.00 |
| Maltitol | 35.00 |
| Erythritol | 19.00 |
| Polydextrose | 3.20 |
| Rice flour | 10.00 |
| Sunflower lecithin | 0.40 |
| Flavor of vanilla | 0.07 |
| Flavor of condensed milk | 0.20 |
| Flavor of gianduia | 0.05 |
| Sucralose sweetener | 0.04 |
| PGPR | 0.04 |

Dough with good viscosity, sweetness, for various types of application, having a tolerable refreshment outside the laxative hazards. Approved by tasters for chocolate without fibers.

### TEST 14-A

The same formula of test 14 was repeated by replacing the rice flour with extract and obtained the same final result.

### TEST 14-B

The same formula of test 14 was repeated by replacing the rice flour with powder for the preparation of rice-based beverage and obtained the same final result.

### TEST 15

| INGREDIENTS | % by weight |
|---|---|
| Cocoa butter | 32.00 |
| Maltitol | 35.00 |
| | |
| Polydextrose | 1.20 |
| Maltodextrin | 21.00 |
| Rice extract | 10.00 |
| Sunflower lecithin | 0.40 |
| Flavor of vanilla | 0.07 |
| Flavor of condensed milk | 0.20 |
| Flavor of gianduia | 0.05 |
| Sucralose sweetener | 0.04 |
| PGPR | 0.04 |

Result: Sandy dough, poor functional and application due to excess maltodextrin, with unsatisfactory softness, disapproved by tasters.

### TEST 16

| INGREDIENTS | % by weight |
|---|---|
| Cocoa butter | 32.00 |
| Maltitol | 35.00 |
| Polydextrose | 2.20 |
| Maltodextrin | 20.00 |
| Rice flour | 10.00 |
| Sunflower lecithin | 0.40 |
| Flavor of vanilla | 0.07 |
| Flavor of condensed milk | 0.20 |
| Flavor of gianduia | 0.05 |
| Sucralose sweetener | 0.04 |
| PGPR | 0.04 |

Result: Acceptable viscosity dough having various applications, with acceptable creaminess with maltodextrin balance. Approved by degassers for fiber-free chocolate.

### TEST 16-A

The same formula of test 16 was repeated by replacing the rice flour with extract and obtained the same final result.

### TEST 16-B

The same formula of test 16 was repeated by replacing rice flour with powder for rice-based beverage preparation and the same final result was obtained.

| TEST 17 | |
|---|---|
| INGREDIENTS | % by weight |
| Cocoa butter | 30.00 |
| Coconut oil | 8.00 |
| Maltitol | 35.00 |
| Erythritol | 6.20 |
| Polydextrose | 5.00 |
| Maltodextrin | 5.00 |
| Rice flour | 10.00 |
| Sunflower lecithin | 0.40 |
| Flavor of vanilla | 0.07 |
| Flavor of condensed milk | 0.20 |
| Flavor of Gianduia | 0.05 |
| Sucralose sweetener | 0.04 |
| PGPR | 0.04 |

Result: Dough with excess softness due to coconut oil, when formatting the dough is very soft, being best for applying fillings for candies. Disapproved by the tasters for white chocolate.

### TEST 18

| INGREDIENTS | % by weight |
|---|---|
| Cocoa butter | 30.00 |
| Coconut oil | 7.00 |
| Maltitol | 35.00 |
| Erythritol | 5.20 |
| Polydextrose | 5.00 |
| Maltodextrin | 5.00 |
| Rice flour | 10.00 |
| Sunflower lecithin | 0.40 |
| Flavor of vanilla | 0.07 |
| Flavor of condensed milk | 0.20 |
| Flavor of gianduia | 0.05 |
| Sucralose sweetener | 0.04 |
| PGPR | 0.04 |

Result: Dough according to the white chocolate standards, softness suitable for all application type with good balance of coconut oil. Approved by tasters for fiber-free chocolate

### TEST 18-A

The same formula of test 18 was repeated by replacing the coconut oil with coconut milk and the same final result was obtained.

### TEST 18-B

The same formula of test 18 was repeated by replacing the rice flour with rice extract and the same final result was obtained.

### TEST 18-C

The same formula of test 18-B was repeated by replacing the coconut milk by coconut oil and the same final result was obtained.

### TEST 18:-D

The same formula of test 18 was repeated by replacing the rice flour with powder for the preparation of rice-based beverage and obtained the same final result.

### TEST 18-E

The same formula of test 18-D was repeated by replacing the coconut oil with coconut milk and the same final result was obtained.

### TEST 19

| INGREDIENTS | % by weight |
|---|---|
| Cocoa butter | 30.00 |
| Coconut oil | 5.00 |
| Maltitol | 35.00 |
| Erythritol | 5.00 |
| Polydextrose | 10.00 |
| Maltodextrin | 9.20 |
| Rice flour | 5.00 |
| Sunflower lecithin | 0.4 |
| Flavor of vanilla | 0.07 |
| Flavor of condensed milk | 0.2 |
| Flavor of gianduia | 0.05 |
| Sucralose sweetener | 0.04 |
| PGPR | 0.04 |

Result: Dough with good viscosity, various types of applications, with polydextrose balance and approved for products without fiber appeal. Approved by tasters.

### TEST 19-A

The same formula of test 19 was repeated by replacing the coconut oil with coconut milk and the same final result was obtained.

### TEST 19-B

The same formula of test 19 was repeated by replacing the rice flour with rice extract and the same final result was obtained.

### TEST 19-C

The same formula of test 19-B was repeated by replacing the coconut milk by coconut oil and the same final result was obtained.

### TEST 19-D

The same formula of test 19 was repeated by replacing the rice flour with powder for rice-based beverage preparation and the same final result was obtained.

### TEST 19-E

The same formula of test 19-D was repeated by replacing the coconut oil with coconut milk and obtained the same final result.

### TEST 20

| INGREDIENTS | % by weight |
|---|---|
| Cocoa butter | 30.00 |
| Coconut oil | 3.00 |
| Maltitol | 35.00 |
| Erythritol | 5.00 |
| Polydextrose | 11.10 |
| Maltodextrin | 13.10 |
| Rice flour | 2.00 |
| Sunflower lecithin | 0.40 |
| Flavor of vanilla | 0.07 |
| Flavor of condensed milk | 0.20 |
| Flavor of gianduia | 0.05 |
| Sucralose sweetener | 0.04 |
| PGPR | 0.04 |

Result: Dough with good viscosity, various types of applications, with polydextrose balance and approved for products without fiber appeal.

### TEST 20-A

The same formula of test 20 was repeated by replacing the coconut oil with coconut milk and the same final result was obtained.

### TEST 20-B

The same formula of test 20 was repeated by replacing the rice flour with rice extract and the same final result was obtained.

### TEST 20-C

The same formula of test 20-B was repeated by replacing the coconut milk by coconut oil and the same final result was obtained.

### TEST 20-D

The same formula of test 20 was repeated by replacing the rice flour with powder for rice-based beverage preparation and the same final result was obtained.

### TEST 20-E

The same formula of test 20-D was repeated by replacing the coconut oil with coconut milk and obtained the same final result.

### TEST 21

| INGREDIENTS | % by weight |
|---|---|
| Cocoa butter | 30.00 |
| Coconut oil | 3.00 |
| Maltitol | 35.00 |
| Erythritol | 5.00 |
| Polydextrose | 11.20 |
| Maltodextrin | 6.00 |
| Rice flour | 9.00 |
| Sunflower lecithin | 0.40 |
| Flavor of vanilla | 0.07 |
| Flavor of condensed milk | 0.20 |
| Flavor of gianduia | 0.05 |
| Sucralose sweetener | 0.04 |
| PGPR | 0.04 |

Result: Dough with good viscosity, various types of applications, with polydextrose balance and approved by tasters and for meeting the fiber source attribute.

### TEST 21-A

The same formula of test 21 was repeated by replacing the coconut oil with coconut milk and the same final result was obtained.

### TEST 21-B

The same formula of test 21 was repeated by replacing the rice flour with rice extract and the same final result was obtained.

### TEST 21-C

The same formula of test 21-B was repeated by replacing the coconut milk with coconut oil and the same final result was obtained.

### TEST 21-D

The same formula of test 21 was repeated by replacing the rice flour with powder for rice-based beverage preparation and the same final result was obtained.

### TEST 21-E

The same formula of the 21-D test was repeated by replacing the coconut oil with coconut milk and the same final result was obtained.

### TEST 22

| INGREDIENTS | % by weight |
|---|---|
| Cocoa butter | 30.00 |
| Coconut oil | 3.00 |
| Maltitol | 35.00 |
| Erythritol | 5.00 |
| Polydextrose | 21.00 |
| Rice flour | 5.20 |
| Sunflower lecithin | 0.40 |
| Flavor of vanilla | 0.07 |
| Flavor of condensed milk | 0.20 |
| Flavor of gianduia | 0.05 |
| Sucralose sweetener | 0.04 |
| PGPR | 0.04 |

] Result: Sandy dough, with high viscosity, difficult to handle. Disapproved due to the excess fibers given by polydextrose, making it difficult to pass the dough to the next refining step, damaging the equipment.

### TEST 23

| INGREDIENTS | % by weight |
|---|---|
| Cocoa butter | 30.00 |
| Coconut oil | 5.00 |
| Maltitol | 30.00 |
| Erythritol | 5.00 |
| Polydextrose | 15.00 |
| Maltodextrin | 9.20 |
| Rice flour | 5.00 |
| Sunflower lecithin | 0.40 |
| Flavor of vanilla | 0.07 |
| Flavor of condensed milk | 0.20 |
| Flavor of gianduia | 0.05 |
| Sucralose sweetener | 0.04 |
| PGPR | 0.04 |

Result: Dough with good viscosity, several types of applications, with polydextrose balance approved by tasters and for meeting the fiber source attribute.

### TEST 23-A

The same formula of test 23 was repeated by replacing the coconut oil with coconut milk and the same final result was obtained.

### TEST 23-B

The same formula of test 23 was repeated by replacing the rice flour with rice extract and the same final result was obtained.

### TEST 23-C

The same formula of test 23-B was repeated by replacing the coconut milk by coconut oil and the same final result was obtained.

### TEST 23-D

The same formula of test 23 was repeated by replacing the rice flour with powder for rice-based beverage preparation and the same final result was obtained.

### TEST 23-E

The same formula of the 23-D test was repeated by replacing the coconut oil with coconut milk and the same final result was obtained.

It has been found in the tests that when using the rice derivative: powder for preparing rice-based beverage in the formulation, there is no need to use the sweetener, due to the characteristic sweetness of the powder for preparing rice-based beverage .

The preferred formulation of the invention for the case of white chocolate with fibers contains:
30% cocoa butter
2% coconut oil
30% maltitol
5% erythritol
15% polydextrose
2.24% maltodextrin
15% powder for preparation of rice-based beverages
0.2% flavor of condensed milk
0.04% PGPR
0.40% sunflower lecithin
0.07% flavor of vanilla
0.05% flavor of gianduia

A typical white chocolate without milk, sugar-free, gluten-free and with fibers made with the preferred formulation of the present invention has the following average nutritional characteristics (in 100 g of product):

| | |
|---|---|
| Energy Value | 445 kCal = 1869 kJ |
| Carbohydrates | 50 g of which: |
| - Sugars | 1.6 g. |
| - Polyols | 35g |
| - Starch | 11 g |
| - Other carbohydrates | 2.1 g |
| Proteins | 1.5g |
| Total Fats | 33 g of which: |
| - Saturated Fats | 20 g |
| - *Trans* fats | 0 g |
| - Monounsaturated Fats | 10 g |
| - Polyunsaturated Fats | 1.1 g |
| - Neutral Fats | 1.9g |
| - Food Fiber | 14g |
| - Sodium | 39 mg |

The formulation of the present invention discloses a formulation range for white chocolate with fibers that works for the purposes of the present invention in the following composition by weight:
20 to 45% cocoa butter;
0 to 7% coconut fat selected from coconut oil and coconut milk;
5 to 45% maltitol;
0 to 19% erythritol;
11.2 to 20% polydextrose;
0 to 20% maltodextrin; and
2 to 20% of rice derivative selected from rice flour, rice extract and powder for preparation of rice-based beverages supplemented by 0.4% sunflower lecithin, 0.2% condensed milk flavor, 0.07% vanilla flavor, 0.05% gianduia flavor, 0.04% PGPR and 0 to 0.04% sucralose sweetener.

The preferred formulation of the invention for the case of white chocolate without fibers contains:
30% cocoa butter
1% coconut oil
30% maltitol
5% erythritol
10% polydextrose
8.24% maltodextrin
15% powder for preparation of rice-based beverage
0.2% condensed milk flavor
0.04% PGPR
0.40% sunflower lecithin
0.07% vanilla flavor
0.05% gianduia flavor

A typical white chocolate without milk, sugar-free, gluten-free and without fibers made with the preferred formulation of the present invention has the following average nutritional characteristics (in 100 g of product):

| | |
|---|---|
| Energy Value | 452 kCal = 1898 kJ |
| Carbohydrates | 56 g including: |
| - Sugars | 1.6g. |
| - Polyols | 35g |
| - Starch | 11 g |
| - Other carbohydrates | 6.9 g |
| Proteins | 1.5g |
| Total Fat | 32 g including: |
| Saturated Fats | 19g |
| - *Trans* Fats | 0 g |
| - Monounsaturated Fats | 10 g |
| - Polyunsaturated Fats | 1.0 g |
| - Neutral Fats | 2.0 g |
| Food Fiber | 9.3g |
| Sodium | 44 mg |

Alternatively, the formulation of the present invention has a formulation range for white chocolate without fibers that works for the purposes of the present invention in the following composition:
20 to 45% cocoa butter;
0 to 7% coconut fat selected from coconut oil and coconut milk;
5 to 45% maltitol;
0 to 19% erythritol;
0 to 11.1% polydextrose;
0 to 20% maltodextrin; and
2 to 20% of rice derivative selected from rice flour, rice extract and powder for preparation of rice-based beverages, supplemented by 0.4% sunflower lecithin, 0.2% condensed milk flavor, 0.07% vanilla flavor, 0.05% gianduia flavor, 0.04% PGPR and 0 to 0.04% sucralose sweetener.

The process of manufacturing white chocolate without lactose, milk-free, sugar-free, soy-free and with or without fibers is similar to conventional processes.

## Claims

1. "FORMULATION OF WHITE CHOCOLATE WITHOUT MILK, SUGAR-FREE, GLUTEN-FREE, SOY-FREE AND WITH FIBERS", consisting of formulation optimized with % by weight of: 20 to 45% cocoa butter, 0.4% sunflower lecithin, 0.2% condensed milk flavor, 0.07% vanilla flavor, 0.05% gianduia flavor, 0.04% of glyceryl polyricinoleate and 0 to 0.04% of sucralose sweetener, supplemented by formulation, **characterized by** 0 to 7% coconut fat, 5 to 45% maltitol, 0 to 19% erythritol, 11.2 to 20% polydextrose, 0 to 20% maltodextrin and 2 to 20% rice derivative.

2. "FORMULATION OF WHITE CHOCOLATE WITHOUT MILK, SUGAR-FREE, GLUTEN-FREE, SOY-FREE AND WITHOUT FIBERS", consisting of formulation optimized with % by weight of: 20 to 45% cocoa butter, 0.4% sunflower lecithin, 0.2% condensed milk flavor, 0.07% vanilla flavor, 0.05% gianduia flavor, 0.04% glyceryl polyricinoleate and 0 to 0.04% sucralose sweetener, supplemented by formulation, **characterized by** 0 to 7% coconut fat, 5 to 45% maltitol, 0 to 19% erythritol, 0 to 11.1% polydextrose, 0 to 20% maltodextrin and 2 to 20% rice derivative.

3. "FORMULATION OF WHITE CHOCOLATE WITHOUT MILK, SUGAR-FREE, GLUTEN-FREE, SOY-FREE AND WITH FIBERS", according to Claim 1, composed of preferred formulation with % by weight of: 30% cocoa butter, 0.4% sunflower lecithin, 0.2% condensed milk flavor, 0.07% vanilla flavor, 0.05% gianduia flavor and 0.04% glyceryl polyricinoleate, supplemented by formulation, **characterized by** 2% coconut oil, 30% maltitol, 5% erythritol, 15% polydextrose, 2.24% maltodextrin and 15 % of powder for preparation of rice-based beverage.

4. "FORMULATION OF WHITE CHOCOLATE WITHOUT MILK, SUGAR-FREE, GLUTEN-FREE, SOY-FREE AND WITHOUT FIBERS", according to Claim 2, comprising a preferred formulation with % by weight of: 30% cocoa butter, 0.4% sunflower lecithin, 0.2% condensed milk flavor, 0.07% vanilla flavor, 0.05% gianduia flavor and 0.04% glyceryl polyricinoleate, supplemented by formulation, **characterized by**, 1% coconut oil, 30% maltitol, 5% erythritol, 10% polydextrose, 8.24% maltodextrin and 15 % of powder for preparation of rice-based beverage.

5. "FORMULATION OF WHITE CHOCOLATE WITHOUT MILK, SUGAR-FREE, GLUTEN-FREE, SOY-FREE AND WITH AND WITHOUT FIBERS", according to Claims 1 and 2, **characterized in that** coconut fat is selected from coconut oil and coconut milk.

6. "FORMULATION OF WHITE CHOCOLATE WITHOUT MILK, SUGAR-FREE, GLUTEN-FREE, SOY-FREE AND WITH AND WITHOUT FIBERS", according to Claims 1 and 2, **characterized in that** the rice derivative is selected from rice flour, rice extract and powder for preparing rice-based beverages.

7. "FORMULATION OF WHITE CHOCOLATE WITHOUT MILK, SUGAR-FREE, GLUTEN-FREE, SOY-FREE AND WITH AND WITHOUT FIBERS", according to Claims 1 and 2, **characterized by** the replacement of sucralose sweetener by powder for preparation of rice-based beverage.
